# EUROPÄISCHE PATENTANMELDUNG

(11) **EP 2 590 139 A1**
(43) Veröffentlichungstag der Anmeldung: **08.05.2013**
(21) Anmeldenummer: 11187848.4
(22) Anmeldetag: 04.11.2011
(51) Int. Cl.: G06T 7/00

(54) **Verfahren und Apparat zur flächenhaften optischen dreidimensionalen Messung von Oberflächentopographien**

(71) Anmelder: Alicona Imaging GmbH, 8074 Grambach bei Graz (AT)
(72) Erfinder: Prantl, Manfred, 8044 Graz (AT); Scherer, Stefan, 8010 Graz (AT); Helmli, Franz, 8505 St. Nikolai/Sausal (AT)
(74) Vertreter: Schwarz & Partner

(57) **Zusammenfassung**

Die Erfindung betrifft ein Verfahren für die flächenhafte optische dreidimensionale Messung von Oberflächentopographien (6) eines Objekts (P) durch Auswertung von Schärfeinformation gewonnen aus Oberflächenaufnahmen eines bildgebenden Systems (1), wobei anhand einer Einzelaufnahme (8) des bildgebenden Systems (1) die schärfsten Bildpunkte (B) der Einzelaufnahme (8) auf der Basis von Schärfeinformation ermittelt werden, wobei die Schnittmenge von Oberfläche und objektseitiger Fokusebene (z₁, z₂ bis zₙ) bestimmt wird und die dreidimensionale Lage des bildgebenden Systems (1) in Relation zum Objekt (P) als Lageinformation gemeinsam mit der je Einzelaufnahme (8) ermittelten Schärfeinformation zur Ermittlung der gemessenen Oberflächentopographie (6) des Objekts (P) ausgewertet wird.

## Beschreibung

Die Erfindung betrifft ein Verfahren für die flächenhafte optische dreidimensionale Messung von Oberflächentopographien eines Objekts durch Auswertung von Schärfeinformation gewonnen aus Oberflächenaufnahmen eines bildgebenden Systems.

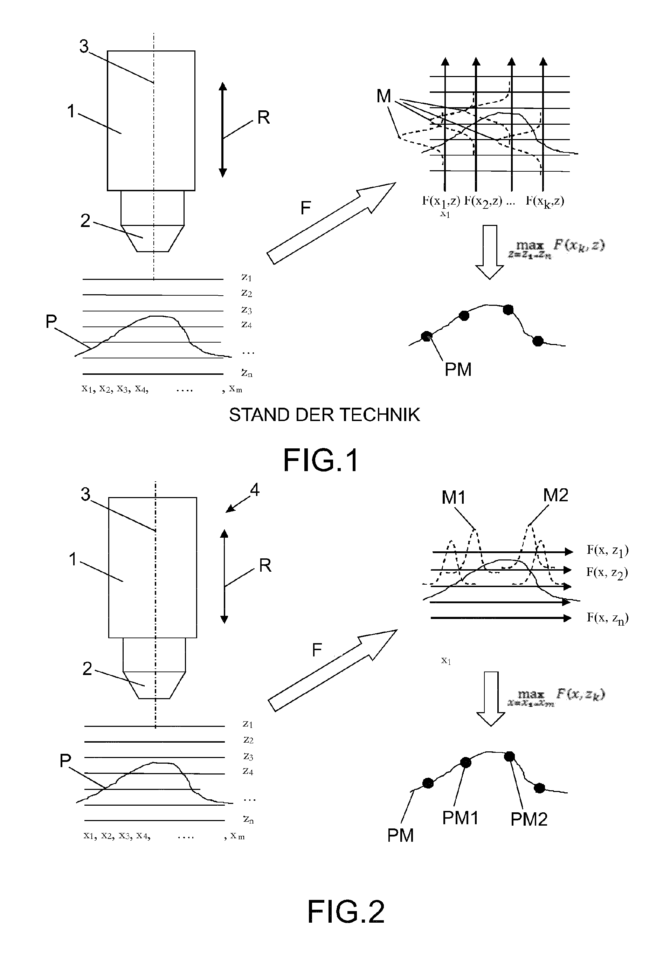

Dem Fachmann ist ein solches Verfahren als klassische Fokusvariation bekannt, welches Verfahren beispielsweise in der ISO-Norm ISO/WD 25178-606 beschrieben ist. Die Durchführung des Verfahrens wird im Folgenden anhand von Figur 1 näher erläutert. Ein bildgebendes System 1 weist ein Objektiv 2 mit einer optischen Achse 3 und einer relativ geringen Schärfentiefe auf. Auf Grund der geringen Schärfentiefe werden nur jene Oberflächenpunkte x₁ bis xₘ einer Probe P als scharfe Bildpunkte abgebildet, die sich bei der Aufnahme mit dem bildgebenden System 1 gerade in der jeweiligen Fokusebene z₁ bis zₙ senkrecht auf die optische Achse 3 befinden. Bei diesem bekannten Verfahren wird das bildgebende System 1 von Bewegungsmitteln in Richtung R der optischen Achse 3 bewegt und von der Probe P werden zahlreiche Einzelaufnahmen beziehungsweise Intensitätsbilder aufgenommen. Die axiale Entfernung des Objektivs 2 zur Probe P wird als Lageinformation zu jeder Einzelaufnahme zugehörig gespeichert. Ein Oberflächenpunkt wird dabei stets auf denselben Bildpunkt in den Einzelaufnahmen abgebildet. Für diesen eindeutigen Punkt kann in jeder Einzelaufnahme bzw. an jeder Aufnahmeposition ein Schärfemaß F(xᵢ, zⱼ) bestimmt werden, wobei xᵢ dem Oberflächenpunkt entspricht für den das Schärfemaß berechnet werden soll, und zⱼ der Fokusebene. Durch geeignete mathematische Methoden kann die Position des Bildpunktes bestimmt werden, an der der Punkt maximal fokussiert ist. So lässt sich eine Punktmenge PM und aus dieser durch Zusammensetzung der einzelnen Punktmengen PM die Oberflächentopographie des gesamten Objekts bzw. 3D-Repräsentation der Oberfläche des Objekts P ermitteln.

In Figur 1 rechts oben ist beispielhaft für fixe Oberflächenpunkte x₁, x₂ bis xₖ die Schärfeinformation als Funktion F(xᵢ,z) der axialen Aufnahmeposition z dargestellt, wobei das Maximum M der Funktion angibt, bei welcher axialen Aufnahmeposition des Objektivs 2 der jeweilige Bildpunkt am schärfsten war. Die Funktion F(xᵢ, z) bezeichnet somit den Verlauf der Schärfemaße über den Verlauf der Fokusebenen z₁..zₙ. Die gemessene Oberflächentopographie der Probe P wird dann aus den Maxima M bzw. schärfsten Bildpunkten alle Einzelbilder zusammengesetzt. Die Schärfe mit der ein Oberflächenpunkt abgebildet wird ändert sich von Aufnahme zu Aufnahme umso mehr, je geringer die Schärfentiefe des abbildenden Objektivs 2 ist.

Bei dem bekannten Verfahren hat sich als Nachteil erwiesen, dass vorerst eine Vielzahl von Einzelbildern der Oberfläche des Objekts aufgenommen werden müssen, um anschließend für jeden einzelnen Oberflächenpunkt des Objekts den Bildpunkt mit dem Maxima der Bildschärfe auszuwerten. Weiters hat sich als Nachteil ergeben, dass bestimmte Oberflächentopographien von Objekten mit dem bekannten Verfahren nicht vermessen werden können. Dies ist beispielsweise bei einer Oberfläche mit einer Bohrung in Richtung der optischen Achse 3 der Fall. Durch die Oberflächenrauheit des Bohrlochs wird Licht von der Bohrlochwand aus allen Tiefen des Bohrlochs reflektiert, weshalb das bekannte Verfahren maximal scharfe Bildpunkte auf dem in der Fokusebene liegenden Umfang der Bohrlochwand in jedem Einzelbild darstellt und weshalb sich in der Schärfeinformation kein Maximum M einstellt.

Der Erfindung liegt die Aufgabe zugrunde, ein Verfahren und einen Apparat für die flächenhafte optische dreidimensionale Messung von Oberflächentopographien eines Objekts zu schaffen, bei dem die vorstehenden Nachteile vermieden sind.

Erfindungsgemäß wird diese Aufgabestellung bei dem Verfahren dadurch gelöst, dass anhand einer Einzelaufnahme des bildgebenden Systems die schärfsten Bildpunkte der Einzelaufnahme als Schärfeinformation ermittelt werden, wobei die Schnittmenge von Oberfläche und objektseitiger Fokusebene bestimmt wird und die dreidimensionale Lage des bildgebenden Systems in Relation zum Objekt als Lageinformation gemeinsam mit der je Einzelaufnahme ermittelten Schärfeinformation zur Ermittlung der gemessenen Oberflächentopographie des Objekts ausgewertet wird.

Hierdurch ist der Vorteil erhalten, dass bereits aus einem einzigen Oberflächenbild beziehungsweise aus einer einzigen Einzelaufnahme der Oberfläche des Objekts Positionsinformation mehrere Oberflächenpunkte und somit 3D-Information des Objekts extrahiert werden kann. Welche Oberflächenbereiche des Objekts sich in der Fokusebene des bildgebenden Systems befinden wird aus der oder den Einzelaufnahmen berechnet. Dabei können sowohl relative als auch absolute Schärfemaße zum Einsatz kommen. Ein Oberflächenpunkt muss daher nicht mehr über mehrere Einzelaufnahmen hinweg auf denselben Bildpunkt abgebildet werden. Folglich ist es möglich, dass derselbe Oberflächenpunkt aus unterschiedlichen Perspektiven gemessen werden kann.

Verändert man daher die Orientierung des bildgebenden Systems und der Objektoberfläche zueinander und/oder ändert deren Abstand, so erhält man unterschiedliche Schnittmengen von Oberfläche und objektseitiger Fokusebene. Durch geeignete Wahl der Schnittmengen kann man zusammenhängende Oberflächen messen. Auch ist es möglich einen Oberflächenpunkt mehrfach aus unterschiedlichen Perspektiven als einen der schärfsten Bildpunkte der Einzelaufnahme aufzunehmen und damit dessen Position noch genauer als durch nur eine Einzelaufnahme zu messen.

Die räumliche Variation ist nicht mehr nur auf den Abstand von Oberfläche und bildgebendem System entlang dessen optischer Achse beschränkt. Dies eröffnet eine Vielzahl neuer Anwendungen. So können zum Beispiel ausgedehnte Messfelder ohne Unterbrechung abgetastet werden. Im Gegensatz zur klassischen Fokusvariation oder der konfokalen Mikroskopie ist das neue Verfahren auch in der Lage die Mantelfläche einer Bohrung zu messen, sofern diese hinreichend rau ist.

Weitere vorteilhafte Ausgestaltungen des erfindungsgemäßen Verfahrens und des erfindungsgemäßen Apparats werden im Folgenden anhand der Figuren näher erläutert.
Figur 1 zeigt das Messprinzip der klassischen Fokusvariation gemäß dem Stand der Technik.
Figur 2 zeigt das erfindungsgemäße Messprinzip.
Figur 3 zeigt eine Messkonfiguration gemäß einem ersten Ausführungsbeispiel, bei der das bildgebende System auf das zu messendes Objekt hin bewegt wird.
Figur 4 verdeutlicht die Gewinnung von 3D-Information unter Verwendung der Messkonfiguration gemäß Figur 3.
Figur 5 zeigt eine Messkonfiguration gemäß einem zweiten Ausführungsbeispiel, bei der das bildgebende System und das zu messende Objekt aneinander vorbei bewegt werden.
Figur 6 verdeutlicht die Gewinnung von 3D-Information unter Verwendung der Messkonfiguration gemäß Figur 5.
Figur 7 zeigt eine Messkonfiguration gemäß einem dritten Ausführungsbeispiel, bei der das zu messende Objekt um eine Achse gedreht wird.
Figur 8 verdeutlicht die Gewinnung von 3D-Information unter Verwendung der Messkonfiguration gemäß Figur 7.
Figur 9 zeigt ein Beispiel für die Berechnung eines Schärfemaßes.
Figur 10 zeigt den Unterschied zwischen absoluten und relativen Schärfemaßen.

Figur 2 zeigt ein Messprinzip, bei dem durch Auswertung nur einer Einzelaufnahme samt der zugehörigen Lageinformation bereits 3D-Information der Oberfläche der Probe P gemessen werden kann. Ein Apparat 4 zur flächenhaften optischen dreidimensionalen Messung von Oberflächentopographien weist das bildgebende System 1 mit dem Objektiv 2 und dessen optischer Achse 3 auf. Das bildgebende System 1 ist zum Aufnehmen von Einzelaufnahmen einer Probe P ausgebildet. In der Figur 2 nicht dargestellte Bewegungsmittel sind zum Bewegen des bildgebenden Systems 1 in Richtung R auf die Probe P zu und von der Probe P weg ausgebildet.

Der Apparat 4 weist aber nunmehr Auswertemittel auf, die zum Ermitteln der schärfsten Bildpunkte der jeweiligen Einzelaufnahme ausgebildet sind. Im Gegensatz zum Messprinzip gemäß dem Stand der Technik erfolgt die Schärfeauswertung erfindungsgemäß jeweils bildweise. Dabei werden die schärfsten Punkte innerhalb einer Einzelaufnahme ermittelt. Zur Bestimmung dieser schärfsten Punkte können sowohl absolute als auch relative Schärfemaße herangezogen werden.

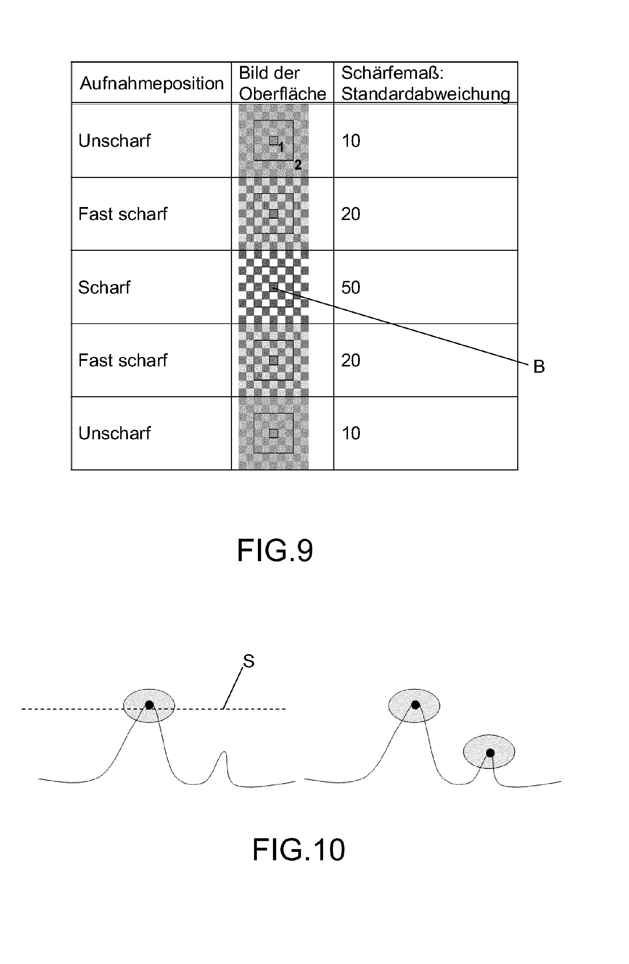

Ein Schärfemaß ist ein Maß dafür, wie scharf ein Objektpunkt in einem Bild abgebildet wird. Prinzipiell gibt es eine Vielzahl von Möglichkeiten um solche Schärfemaße zu berechnen. Typischerweise werden dafür die Sensorwerte des Einzelbildes (Grauwerte bzw. Farbwerte eines Einzelbildes) in einer kleinen lokalen Umgebung um den Punkt analysiert, für den das Schärfemaß berechnet werden soll. Generell gilt, dass ein Punkt umso schärfer abgebildet wird, je größer die Variation der Sensorwerte in der lokalen Umgebung ist. Ein Beispiel für ein Schärfemaß ist zum Beispiel die Standardabweichung der Sensorwerte in einer lokalen Umgebung wie in Figur 9 für ein Objekt mit synthetischem Schachbrettmuster dargestellt, in der als Schärfemaß die Standardabweichung in einer lokalen Umgebung (5x5 Punkte) verwendet worden ist. Wie man sieht ist der Wert des Schärfemaßes (also hier die Standardabweichung in einer lokalen Umgebung) dort am höchsten, wo der Punkt am schärftsten abgebildet ist.

Ein absolutes Schärfemaß ist ein Maß bei dem sich ein scharfer Punkt der für die Bestimmung der 3D Koordinaten in Frage kommt, dadurch kennzeichnet, dass sein Schärfemaß größer als ein absoluter Wert ist. D.h. durch einen einfachen Schwellwert S können alle scharfen Punkte in einem Bild ermittelt werden, sobald für jeden Punkt das absolute Schärfemaß berechnet worden ist (siehe Figur 10 links).

Ein relatives Schärfemaß (Figur 10 rechts) kennzeichnet sich dadurch aus, dass man für die Beurteilung ob ein Punkt scharf abgebildet worden ist, die Schärfemaße in einer lokalen Umgebung um diesen Punkt betrachtet. Ein Punkt könnte demnach als scharfer Objektpunkt klassifiziert werden, wenn er schärfer ist, als alle Punkte in einer lokalen Umgebung um ihn herum.

Wenn zum Beispiel in einem Bild nur eine Linie scharf abgebildet worden ist, hat die Schärfekurve die auf einem Profilpfad normal über diese Linie verläuft ein relatives Maximum, das zur Ermittlung des höchsten Punktes ermittelt werden kann. Dies ist z.B. in den Funktionskurven in Figur 2 der Fall für die die Maxima M 1 und M2 ermittelt worden sind.

Die Standardabweichung, die in Figur 10 verwendet worden ist, ist ein typisches Beispiel für ein relatives Schärfemaß, weil der Wert des Schärfemaßes zum Beispiel sehr stark von der Helligkeit des Bildes abhängt und es so schwierig ist einen absoluten Schwellwert für das Schärfemaß anzugeben. Würde man zum Beispiel bei der Berechnung zusätzlich den mittleren Grauwert in der lokalen Umgebung berücksichtigen, dann hätte man ein absolutes Schärfemaß. Für relative und absolute Schärfemaße gibt es in der Literatur eine Vielzahl an unterschiedlichen Varianten.

In Figur 2 rechts oben ist beispielhaft für die Fokusebenen z₁, z₂, ...zₙ der Verlauf der Schärfekurve als Funktion F(x, z₁), F(x, z₂) bis F(x, zₙ) der Position x dargestellt. Die Funktionen sind also dargestellt für die Einzelaufnahmen in denen das Objektiv 2 gerade die Oberflächenpunkte der Probe P in der Fokusebene z₁, z₂ bis zₙ als scharfe bzw. schärfste Bildpunkte aufgenommen hat. So sind beispielsweise unter anderen jene Bildpunkte die schärfsten Bildpunkte in der Einzelaufnahme der Fokusebene z₂, die in dieser Einzelaufnahme ein Maximum M1 und M2 der Schärfeinformation aufweisen. Zur besseren Veranschaulichung ist die Funktion der Schärfekurve eindimensional als Punktmenge PM eingezeichnet. Sie ist für flächenhafte Sensoren, die typischerweise verwendet werden, aber zweidimensional. In Figur 2 sind die Objektpunkte PM1 und PM2 der Punkmenge PM dargestellt, die durch Transformation der detektierten scharfen Bildpunkte in 3D Koordinaten entstanden sind. Die Entfernung der Fokusebenen z₁, z₂ bis zₙ untereinander ergibt sich aus der von den Bewegungsmitteln an die Auswertemittel übermittelten Lageinformation. Bei der Auswertung mehrerer Einzelaufnahmen werden die für jede Einzelaufnahme ermittelten schärfsten Bildpunkte unter Berücksichtigung der Lageinformation zu der gemessenen Oberflächentopographie der Probe P zusammengesetzt.

Auf Grund dieser erfindungsgemäßen Auswertung der Einzelaufnahmen können die Einzelaufnahmen aus beliebiger Perspektive aufgenommen werden, solange die Bewegung zwischen den Aufnahmen nachvollziehbar ist und sich die objektseitige Fokusebene z₁ bis zₙ des bildgebenden Systems 1 und der Oberfläche der Probe P schneiden. Die erfindungsgemäßen Bewegungsmittel müssen hierfür die bei jeder Einzelaufnahme aktuelle Lageinformation an die Auswertemittel abgeben beziehungsweise für die Auswertung der Einzelaufnahme zugeordnet speichern.

Wird ein Oberflächenpunkt in mehreren Einzelaufnahmen als fokussiert klassifiziert, so können auch diese Informationen in die Berechnung der 3D-Position einfließen. Die Positionsbestimmung ist also nicht auf Einzelaufnahmen beschränkt, kann vorteilhafterweise aber bereits auf Grund nur einer Einzelaufnahme erfolgen. Vorteilhafterweise kann aber die Genauigkeit der Positionsbestimmung erhöht werden, wenn ein Oberflächenpunkt in zwei oder mehreren Einzelaufnahmen als scharfer Bildpunkt dargestellt ist.

Zusätzlich sollte beachtet werden, dass die Fokusebene eines realen Messgerätes niemals vollkommen eben ist, sondern unterschiedlichen optischen Verzeichnungen unterworfen ist. Die wichtigste dieser Verzeichnungen ist die Bildfeldkrümmung, die dazu führt, dass die Fokusebene gekrümmt ist. Bei der Transformation von scharfen Bildpunkten in 3D Koordinaten müssen diese Verzeichnungen vorab kalibriert werden und für die 3D Transformation verwendet werden. Im eindimensionalen Fall könnt z.B. jedem Punkt im Bild ein z-Korrekturwert zugeordnet werden, der von der Bildfeldkrümmung abhängt, und bei der Berechnung der 3D Koordinaten entsprechend berücksichtigt wird.

Im Folgenden werden exemplarische Konfigurationen vorgestellt, die sich das hier vorgestellte Verfahren beziehungsweise Messprinzip zu Nutze machen.

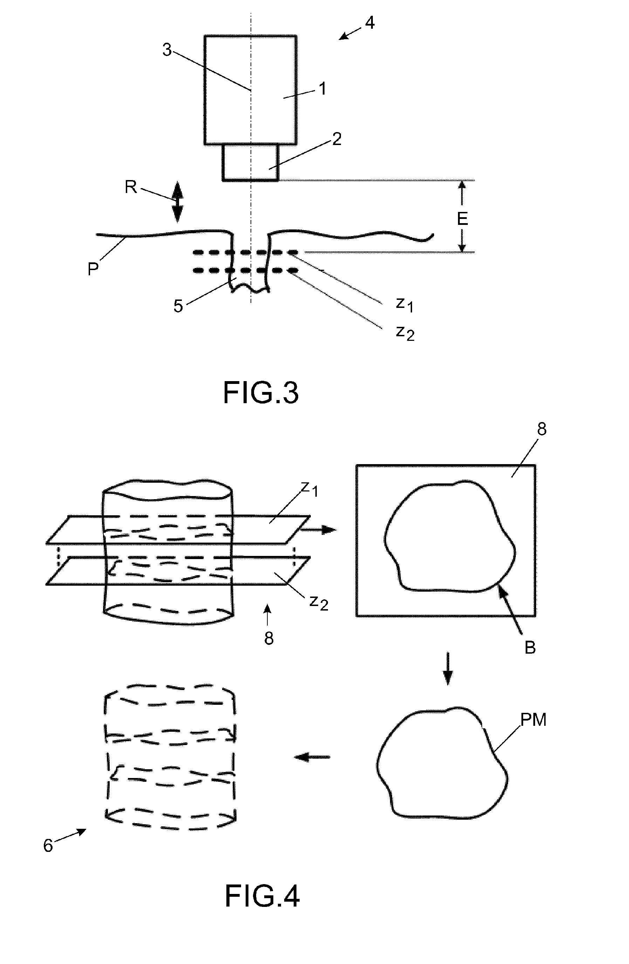

Die Figur 3 und 4 zeigen schematisch die Messung der Oberflächentopographie einer Probe P mit einem Bohrloch 5 gemäß einem ersten Ausführungsbeispiel der Erfindung. Der Abstand zwischen der Probe P und dem bildgebenden System 1 wird entlang der optischen Achse 3 variiert, wodurch die objektseitige Fokusebene des bildgebenden Systems 1, die einen Abstand E von dem Objektiv 2 aufweist, durch die Probe P wandert. An jeweils unterschiedlichen Positionen des bildgebenden Systems 1 werden Einzelaufnahmen 8 aufgenommen, wobei jeweils unterschiedliche Oberflächenpunkte in den Fokusebenen z₁, z₂ bis zₙ als schärfste Bildpunkte dargestellt werden. Zu jeder Einzelaufnahme 8 ist die zugehörige Aufnahmeposition beziehungsweise Lageinformation bekannt. Aus jeder Einzelaufnahme 8 werden diejenigen Bildpunkte B extrahiert, die sich während der Aufnahme in der Fokusebene des bildgebenden Systems 1 befanden. Diese Bereiche entsprechen der Schnittmenge aus Objektoberfläche und der objektseitigen Fokusebene des bildgebenden Systems 1. Welche Bereiche das sind, wird mittels eines geeigneten Schärfemaßes bestimmt. Somit erhält man aus den Einzelaufnahmen 8 zu jeder Aufnahmeposition eine Menge an fokussierten Bildpunkten B und extrahiert hieraus gemeinsam mit der Lageinformation eine Punktmenge PM. Aus dieser kann man die 3D-Repräsentation 6 der gemessenen Oberfläche und auch die Mantelfläche des Bohrlochs 5 der Probe P rekonstruiert.

Die klassische Fokusvariation gemäß Figur 1 scheitert daran die Mantelfläche des Bohrlochs 5 zu messen, da für jede laterale Objektposition nur eine vertikale Position ermittelt werden kann. Gleiches gilt zum Beispiel auch für die konfokale Mikroskopie.

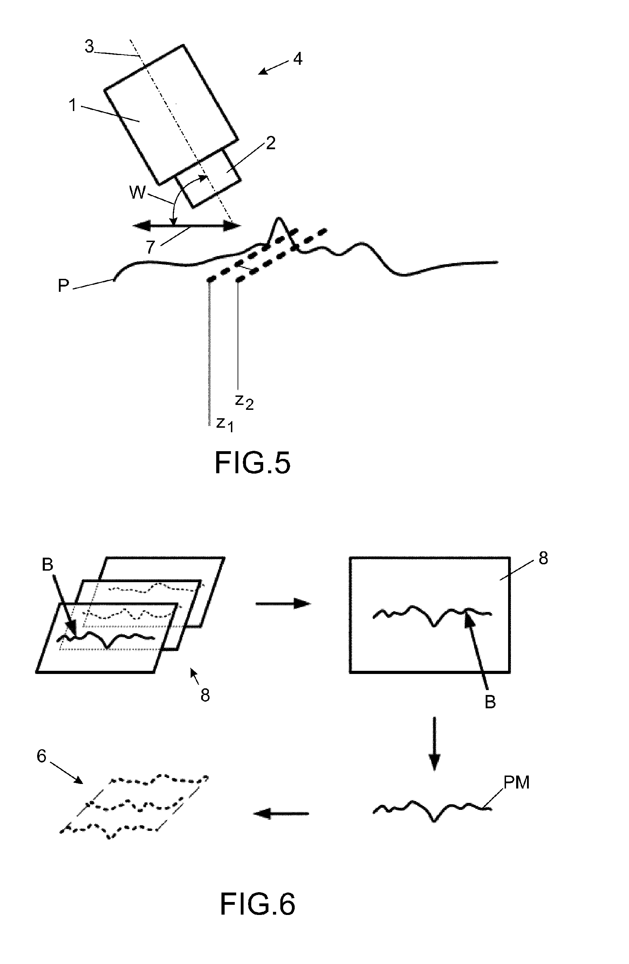

Die Figuren 5 und 6 zeigen eine Konfiguration gemäß einem zweiten Ausführungsbeispiel der Erfindung, mit der man ausgedehnte Flächen schnell und ohne Unterbrechung messen kann. Sogar Endlosmessungen sind möglich. Die Probe P wird mit einer kontinuierlichen vorgegebenen Geschwindigkeit entlang einer vorgegebenen Bewegungsbahn 7 unter einem Winkel W ungleich 90 Grad zur optischen Achse 3 des bildgebenden Systems 1 bewegt, wobei die jeweilige Lageinformation bei Aufnahme jeder Einzelaufnahme gespeichert wird. Während sich bildgebendes System 1 und die Probe P aneinander vorbei bewegen variiert die Schnittmenge bzw. die schärfsten Bildpunkte B von objektseitiger Fokusebene z₁, z₂ bis zₙ und Oberfläche von Einzelaufnahme zu Einzelaufnahme. Analog zur oben beschriebenen Konfiguration erhält man aus den Einzelaufnahmen 8 zu jeder Aufnahmeposition eine Menge an fokussierten Bildpunkten B und extrahiert und hieraus gemeinsam mit der Lageinformation die Punktmenge PM. Aus dieser kann man die 3D-Repräsentation 6 der gemessene Oberfläche der Probe P rekonstruieren

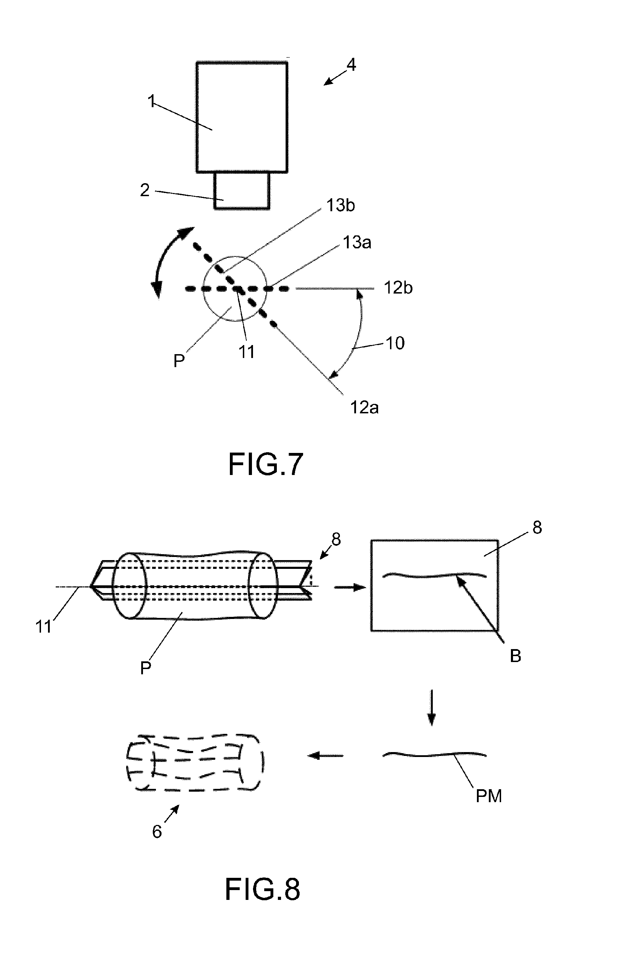

Die Figuren 7 und 8 zeigen eine Konfiguration gemäß einem dritten Ausführungsbeispiel der Erfindung, bei der die Orientierung von bildgebendem System 1 und Probe P durch eine Drehbewegung von bildgebendem System 1 und/oder der Probe P geändert wird. Im dargestellten Beispiel wird die Probe P in Winkelschritten 10 um die eigene Achse 11 rotiert, so dass die Probe P an verschiedenen Positionen 12 (12a, 12b,..) von der objektseitigen Fokusebene 13 (13a, 13b,...) des bildgebenden Systems 1 geschnitten wird. Die Einzelaufnahmen 8 der Oberfläche der Probe P werden nach dem bereits beschriebenen Verfahren analysiert. Aus den Einzelaufnahmen 8 werden die fokussierten Bildpunkte B extrahiert und gemeinsam mit der Lageinformation die Punktmenge PM berechnet. Aus dieser kann man die 3D-Repräsentation 6 der Oberfläche der Probe P konstruieren.

Diese in den drei vorstehend Ausführungsbeispielen angegebenen Bewegungsmodi zwischen bildgebendem System 1 und Probe P lassen sich selbstverständlich beliebig kombinieren. Es ist also jede beliebige Bewegung von Objekt und/oder bildgebendem System, welche zu einer Variation der Schnittmenge von Oberfläche und objektseitiger Brennebene führt, möglich. Einzige Bedingung ist, dass die Bewegung durch geeignete Bewegungsmittel als Lageinformation gespeichert und somit nachvollzogen werden kann.

Bei der Wahl der Aufnahmekonfiguration ist weiterhin zu beachten, dass die genannte Schnittmenge zwischen Objekt und Fokusebene eine solche ist, die für die Bestimmung von gut fokussierten Bildbereichen förderlich ist und aus denen sich die 3D Position der fokussierten Bildpunkte gut bestimmen lässt. Dies ist im Besonderen dann der Fall, wenn die Fokusebene die Oberfläche in einem solchen Winkel schneidet, sodass lediglich ein schmaler Streifen an Oberflächenpunkten fokussiert ist.

Zusammenfassend kann somit festgestellt werden, dass mit dem erfindungsgemäßen Verfahren durch die Auswertung der schärfsten Bildpunkte der Einzelaufnahme bereits anhand nur dieser einen Einzelaufnahme ein erstes Messergebnis der Oberflächentopographie des Objekts vorliegt. Umso mehr schärfste Bildpunkte weiterer Einzelaufnahmen dem Messergebnis der Oberflächentopographie hinzugefügt werden, umso mehr Information über die gesamte Oberfläche des Objekts liegt vor und umso genauer wird die gemessene Oberflächentopografie. Wird ein Punkt der Oberfläche des Objekts aus unterschiedlichen Perspektiven vermessen, dann kann die Messgenauigkeit des zugehörigen Bildpunktes erhöht werden. Je nach der Form des Objekts und der gewünschten Genauigkeit des Messergebnisses in bestimmten Bereichen des Objekts kann die optimal angepasste Bewegungsbahn und die Anzahl der Einzelaufnahmen festgelegt werden.

## Patentansprüche

1. Verfahren für die flächenhafte optische dreidimensionale Messung von Oberflächentopographien (6) eines Objekts (P) durch Auswertung von Schärfeinformation gewonnen aus Oberflächenaufnahmen eines bildgebenden Systems (1), **dadurch gekennzeichnet, dass** anhand zumindest einer Einzelaufnahme (8) des bildgebenden Systems (1) die schärfsten Bildpunkte (B) der Einzelaufnahme (8) als Schärfeinformation ermittelt werden, wobei die Schnittmenge von Oberfläche und objektseitiger Fokusebene (z₁, z₂ bis zₙ) bestimmt wird und die dreidimensionale Lage des bildgebenden Systems (1) in Relation zum Objekt (P) als Lageinformation gemeinsam mit der je Einzelaufnahme (8) ermittelten Schärfeinformation zur Ermittlung der gemessenen Oberflächentopographie (6) des Objekts (P) ausgewertet wird.

2. Verfahren gemäß Anspruch 1, **dadurch gekennzeichnet, dass** zwischen den Einzelaufnahmen (8) das bildgebende System (1) in Relation zum Objekt (P) parallel zur optischen Achse (3) des bildgebenden Systems (1) bewegt wird.

3. Verfahren gemäß Anspruch 1, **dadurch gekennzeichnet, dass** zwischen den Einzelaufnahmen (8) das bildgebende System (1) und/oder das Objekt (P) auf parallelen Bahnen aneinander vorbei bewegt werden.

4. Verfahren gemäß einem der vorherigen Ansprüche, **dadurch gekennzeichnet, dass** zwischen den Einzelaufnahmen (8) das bildgebende System (1) und/oder das Objekt (P) um eine Drehachse (11) gedreht werden.

5. Verfahren gemäß Anspruch 1, **dadurch gekennzeichnet, dass** zwischen den Einzelaufnahmen (8) das bildgebende System (1) in Relation zum Objekt (P) entlang einer beliebig geformten Bewegungsbahn bewegt wird.

6. Verfahren gemäß einem der vorherigen Ansprüche, **dadurch gekennzeichnet, dass** für die Positionsbestimmung eines Oberflächenpunktes die Schärfeinformation und Lageinformation nur einer Einzelaufnahme (8) ausgewertet wird.

7. Verfahren gemäß einem der Ansprüche 1 bis 5, **dadurch gekennzeichnet, dass** für die Positionsbestimmung eines Oberflächenpunktes die Schärfeinformation und Lageinformation von zumindest zwei Einzelaufnahmen (8) ausgewertet werden, wobei die Einzelaufnahmen (8) aus unterschiedlichen Perspektiven aufgenommen wurden.

8. Verfahren gemäß einem der vorherigen Ansprüche, **dadurch gekennzeichnet, dass** für die Ermittlung der schärfsten Bildpunkte der Einzelaufnahme relative und/oder absolute Schärfemaße berücksichtigt werden.

9. Apparat (4) zur flächenhaften optischen dreidimensionalen Messung von Oberflächentopographien nach dem Verfahren gemäß einem der Ansprüche 1 bis 8, **dadurch gekennzeichnet, dass** der Apparat (4) ein bildgebendes System (1) zum Aufnehmen von Einzelaufnahmen (8) der Oberfläche des Objekts (P) und Auswertemittel zum Ermitteln der schärfsten Bildpunkte der jeweiligen Einzelaufnahme (8) als Schärfeinformation der Einzelaufnahme und Bewegungsmittel zum Verändern der dreidimensionale Lage des bildgebenden Systems (1) in Relation zum Objekt (P) aufweist, wobei die Auswertemittel weiters zum Auswerten der Lageinformation des bildgebenden Systems (1) in Relation zum Objekt (P) je Einzelaufnahme zusammen mit der Schärfeninformation der Einzelaufnahme (8) zur Ermittlung der Oberflächentopographie (6) des Objekts (P) ausgebildet sind.

10. Apparat (4) gemäß Anspruch 9, **dadurch gekennzeichnet, dass** die Bewegungsmittel zum Bewegen des Objekts (P) und/oder des bildgebenden Systems (1) entlang einer beliebig geformten Bewegungsbahn ausgebildet sind.

11. Apparat (4) gemäß Anspruch 10, **dadurch gekennzeichnet, dass** die Bewegungsmittel zum Ändern der Drehlage des bildgebenden Systems (1) und/oder des Objekts (P) und/oder zum Bewegen des bildgebenden Systems (1) in Relation zum Objekt (P) parallel zur optischen Achse (3) des bildgebenden Systems (1) ausgebildet sind.

12. Apparat (4) gemäß Anspruch 10, **dadurch gekennzeichnet, dass** die Bewegungsmittel zum Vorbeibewegen des Objekts (P) an dem bildgebenden System (1) ausgebildet sind, wobei das Objekt (P) kontinuierlich und mit vorgegebener Geschwindigkeit entlang einer vorgegebenen Bewegungsbahn und insbesondere in einem Winkel (W) ungleich 90 Grad zur optischen Achse (3) des bildgebenden Systems (1) bewegt wird.
